# EUROPÄISCHE PATENTSCHRIFT

(11) **EP 1 123 475 B1**
(45) Veröffentlichungstag und Bekanntmachung des Hinweises auf die Patenterteilung: **07.08.2002**
(21) Anmeldenummer: 99971072.6
(22) Anmeldetag: 16.10.1999
(51) Int. Cl.: F16H 61/02, F16H 61/16

(54) **VERFAHREN ZUR STEUERUNG EINES AUTOMATGETRIEBES EINES KRAFTFAHRZEUGES BEI EINER SPONTANEN GAS-PEDALRÜCKNAHME**
METHOD FOR CONTROLLING THE AUTOMATIC GEARBOX OF A MOTOR VEHICLE DURING SPONTANEOUS RELEASE OF THE ACCELERATOR PEDAL
PROCEDE DE COMMANDE D'UNE BOITE AUTOMATIQUE D'UN VEHICULE AUTOMOBILE LORS D'UN RELACHEMENT SPONTANE DE L'ACCELERATEUR

(30) Priorität: 24.10.1998 DE 19849059
(43) Veröffentlichungstag der Anmeldung: 16.08.2001
(73) Patentinhaber: ZF FRIEDRICHSHAFEN Aktiengesellschaft, 88038 Friedrichshafen (DE)
(72) Erfinder: HENNEKEN, Markus, D-88079 Kressbronn (DE); JAUCH, Friedemann, D-88074 Meckenbeuren (DE); HERBSTER, Kai-Uwe, D-88046 Friedrichshafen (DE); SCHULER, Franz-Josef, D-88079 Kressbronn (DE); MAUZ, Thomas, D-88079 Kressbronn (DE)
(86) Internationale Anmeldenummer: EP9907873
(87) Internationale Veröffentlichungsnummer: WO0025046

(56) Entgegenhaltungen:
- DE-A- 4 120 566
- DE-A- 4 334 146

## Beschreibung

Die Erfindung betrifft ein Verfahren zur Steuerung eines Automatgetriebes eines Kraftfahrzeuges bei einer spontanen Gas-/ Pedalrücknahme nach der im Patentanspruch 1 näher definierten Art.

Moderne Automatgetriebe in Kraftfahrzeugen werden von einer Elektronischen Getriebesteuerung (EGS) angesteuert, welche zur selbsttätigen Auswahl eines abgelegten Schaltprogrammes, welches z.B. eine aus der Veröffentlichung "ATZ Automobiltechnische Zeitschrift" 94 (1992) bekannte Fahrertyp-Erkennung, eine Umwelterkennung, eine Fahrsituationserkennung oder eine Erkennung eines manuellen Eingriffs beschreibt, und zur situationsabhängigen Gangwahl mit weiteren Steuergeräten und Rechnern verschiedener Aggregate kommuniziert.

Durch Schaltkennlinien, welche in der Elektronischen Getriebesteuerung abgelegt sind, werden die Betriebspunkte festgelegt, in denen von der Elektronischen Getriebesteuerung ein Befehl zum Hochschalten oder Rückschalten an die Hydraulik ausgegeben wird. Die Schaltkennlinien sind dabei üblicherweise als Funktion einer Fahrzeuggeschwindigkeit und einer Drosselklappenstellung dargestellt, wobei die Drosselklappenstellung die Stellung des Fahrpedals wiedergibt, da die Drosselklappe bei älteren Ausführungen mechanisch und bei moderneren Ausführungen elektronisch mit dem Fahrpedal wirkverbunden ist.

Wenn der Fahrer den Fuß vom Fahrpedal nimmt, wird bekannterweise der Öffnungsquerschnitt der Drosselklappe zur Gasrücknahme verringert, wobei mit ausreichend hoher Fahrzeuggeschwindigkeit ein Hochschalten in einen ökonomischeren Gang, z.B. vom dritten in den vierten Gang, eingeleitet wird.

Dies erweist sich jedoch in bestimmten Fahrsituationen, wie beispielsweise im Schubbetrieb, als problematisch, da die Motordrehzahl mit dem Hochschalten abfällt. Dies ist bei einem anschließend erforderlichen oder gewünschten Beschleunigen hinderlich, da nämlich wieder mindestens eine - entsprechend Zeit in Anspruch nehmende - Rückschaltung durchgeführt werden muß, um über die gewünschte Motorleistung verfügen zu können.

Falls ein derartiges Hochschalten auch bei einer kurzen Pedalrücknahme bzw. Gasrücknahme, auch "FastOff" genannt, durchgeführt wird, kann dies in kritischen Fahrsituationen wie z.B. bei einem abgebrochener Überholvorgang, nicht nur zu einer Minderung des Fahrkomforts, sondern auch zu einer Gefahrensituation führen. Hier ist es wünschenswert, daß das Getriebe in dem aktuellen Gang wenigstens eine bestimmte Zeit verweilt, da erstens eine Verzögerung des Fahrzeugs gewünscht ist und zweitens ein Drehzahlbereich mit maximalen Antriebsmoment günstig ist, wenn z.B. der Überholvorgang fortgesetzt wird.

Aus der EP 0 574 965 A1 ist ein Verfahren zur Ermittlung eines Schaltsignales aus einem Schaltkennfeld bekannt, mit dem verhindert werden soll, daß das Getriebe im Schubbetrieb und gegebenenfalls unter hoher Querbeschleunigung hochschaltet.

Dies wird erreicht, indem das Überschreiten von Hochschaltkennlinien des Schaltfeldes durch den sich aus der augenblicklichen Fahrgeschwindigkeit und einer Drosselklappenstellung ergebenden Betriebspunkt festgehalten wird. Gemäß diesem bekannten Verfahren wird die Stellung des Fahrpedals gemessen und beim Überschreiten der Hochschaltkennlinie in eine Fahrpedalgeschwindigkeit umgewandelt. Der so erhaltene Meßwert der Fahrpedalgeschwindigkeit wird mit einem in der Getriebesteuerung abgespeicherten Grenzwert verglichen. Beim Unterschreiten dieses Grenzwertes wird ein Schaltsignal zum Hochschalten abgegeben. Die Fahrpedalgeschwindigkeit ist somit ein Maß dafür, ob das Getriebe hochschaltet oder im bisherigen Gang verbleibt. Des weiteren wird vorgeschlagen, daß der Hochschaltvorgang gegebenenfalls beim Überschreiten eines Querbeschleunigungsgrenzwertes unterdrückt wird.

In der Praxis hat sich dieses Verfahren, bei dem eine Hochschaltverhinderung in Abhängigkeit von einem negativen Gradienten des Gaspedalwinkels ausgelöst wird, jedoch dahingehend als nachteilig erwiesen, daß die Hochschaltverhinderung insbesondere bei kurzzeitigen Pedalrücknahmen zu wenig sensibel ist. So setzt die Hochschaltverhinderung insbesondere häufig zu früh oder zu spät ein, oder daß zu lange oder zu kurz mit einer Drehzahl gefahren wird, welche für die aktuelle Betriebssituation zu hoch ist. Dies bewirkt wiederum eine spürbare Einschränkung des Fahrkomforts.

Aus der DE 41 20 566 ist ein Verfahren zur Getriebesteuerung nach dem Oberbegriff des Anspruchs 1 bekannt. Bei diesem bekannten Verfahren muß zur Aktivierung der Hochschaltverhinderung zusätzlich zum Pedalwinkelgradienten das Kriterium "Schubbetrieb" über eine Zug-Schub-Kennlinie erkannt sein, jedoch ist dies nicht ausreichend, um ein richtiges Schaltverhalten bei spontanen Gasrücknahmen zu gewährleisten.

Der vorliegenden Erfindung liegt die Aufgabe zugrunde, ein Verfahren zur Steuerung eines Automatgetriebes eines Kraftfahrzeuges bei einer spontanen Gas-/ Pedalrücknahme zur Verfügung zu stellen, mit dem eine der Fahrsituation angepaßte Hochschaltverhinderung durchgeführt wird, so daß bei spontaner Pedalrücknahme eine Fahrgeschwindigkeitsverzögerung eintritt und gleichzeitig eine größtmögliche Spontanität für eine anschließende Beschleunigung gegeben ist.

Erfindungsgemäß wird diese Aufgabe mit einem Verfahren nach dem Patentanspruch 1 gelöst.

Bei dem erfindungsgemäßen Verfahren wird der Zustand der Hochschaltverhinderung in vorteilhafter Weise nicht nur abhängig von einem Pedalstellungsgradienten, sondern unter zusätzlicher Berücksichtigung der Sportlichkeit des Fahrverhaltens durch den Fahrertyp-Bewertungszähler und der Erkennung des Schubbetriebs in Abhängigkeit von Motordrehzahl und Fahrbahnneigung aktiviert. Dies ermöglicht eine präzise Getriebeabstimmung mit einer situationsgerechten, an die Umgebung, wie z.B. Berg- oder Gefällefahrt, und an den Fahrertyp angepaßten Schaltstrategie.

Zur Genauigkeit des erfindungsgemäßen Verfahrens bei einer spontanen Gas-/ Pedalrücknahme trägt bei, daß der Zustand der Hochschaltverhinderung nur verlassen wird, wenn mehrere hierfür wesentliche Kriterien erfüllt sind. Eines dieser Ausstiegskriterien besteht darin, daß von der Elektronischen Getriebesteuerung eindeutig Zugbetrieb erkannt werden muß. Zusätzlich werden als weitere Ausstiegskriterien Grenzwerte des Pedalstellungsgradienten und Zeitgrenzen in Abhängigkeit von der Fahrbahnneigung geprüft.

Darüber hinaus hat die Verwendung von Kennfeldern in dem Verfahren nach der Erfindung deutliche Vorteile, insbesondere gegenüber der Verwendung von Grenzwerten. Während bei der Verwendung von Grenzwerten das Problem besteht, daß bei einem kleinen Pedalstellungswert, d.h. einem nur gering gedrückten Gaspedal, lediglich ein geringer Rückstellweg vorhanden ist und damit ein entsprechend kleiner Pedalstellungsgradient gegeben ist, welcher häufig unter einem zur Aktivierung der Hochschaltverhinderung notwendigen Grenzwert liegt, besteht bei einem Kennfeld, in dem die Kurve des Pedalstellungsgradienten bei Null beginnt, die Möglichkeit einer Hochschaltverhinderung bei spontanen Pedalrücknahmen, auch wenn das Pedal nur geringfügig gedrückt ist.

Indem der Zustand der Hochschaltverhinderung nach einer ersten Zeit erst verlassen wird, wenn ein bestimmter positiver Pedalstellungsgradient nicht überschritten wird und im Falle, daß der positive Pedalstellungsgradient überschritten und wieder unterschritten wird, eine zweite Zeit gestartet wird, nach der der Zustand der Hochschaltverhinderung verlassen wird, wenn die positive Pedalstellungsgradientenschwelle nicht während dieser Zeit nochmals überschritten wird, soll der Ausstieg erst eingeleitet werden, wenn sicher eine konstante Gaspedalstellung erkannt ist.

Für den Fahrer ergibt sich mit der erfindungsgemäßen Hochschaltverhinderung bei einer spontanen Gas-/ Pedalrücknahme ein erhöhter Fahrkomfort und eine größere Sicherheit in kritischen Fahrsituationen wie z.B. einem abgebrochenem Überholvorgang.

In einer vorteilhaften Ausführung des erfindungsgemäßen Verfahrens kann es vorgesehen sein, daß eine dritte Zeit gestartet wird, wenn eine negative Pedalstellungsgradientenschwelle unterschritten wird bevor der erste Zeitraum verstrichen ist.

Der Ausstieg aus dem Zustand der Hochschaltverhinderung erfolgt hier, wenn Zugbetrieb erkannt ist, aber eine negative Pedalstellungsgradientenschwelle unterschritten wird. Dann wird eine dritte Verzögerungszeit gestartet, die abhängig von der Fahrbahnneigung, d.h. Berg- oder Talfahrt, begrenzt ist. Damit wird bewirkt, daß ein wiederholter negativer Pedalstellungsgradient berücksichtigt wird und den Ausstieg verzögern kann.

Weitere Vorteile und Weiterbildungen der Erfindung ergeben sich aus den Unteransprüchen und aus dem nachfolgend prinzipmäßig anhand der Zeichnung beschriebenen Ausführungsbeispiel.

Es zeigt :
- Fig. 1: eine schematisierte Darstellung eines Verfahrens zur Steuerung eines Automatgetriebes eines Kraftfahrzeuges bei einer spontanen Gas-/Pedalrücknahme in einem Zustandsdiagramm;
- Fig. 2: einen Verlauf eines Pedalstellungsgradienten abhängig von der Zeit, wobei der Zustand einer Hochschaltverhinderung in Abhängigkeit einer Pedalstellungsgradientenschwelle und einer Zeitgrenze verlassen wird;
- Fig. 3: einen Verlauf des Pedalstellungsgradienten abhängig von der Zeit, wobei der Zustand der Hochschaltverhinderung in Abhängigkeit einer weiteren Pedalstellungsgradientenschwelle und einer weiteren Zeitgrenze verlassen wird; und
- Fig. 4: einen Verlauf des Pedalstellungsgradienten nach Fig. 3 abhängig von der Zeit, wobei der Zustand der Hochschaltverhinderung in Abhängigkeit von der in Fig. 3 dargestellten Pedalstellungsgradientenschwelle und Zeitgrenze aufrecht erhalten wird; und
- Fig. 5: einen Verlauf eines Pedalstellungsgradienten abhängig von der Zeit, wobei der Zustand der Hochschaltverhinderung in Abhängigkeit einer weiteren Pedalstellungsgradientenschwelle, einer weiteren Zeitgrenze und einer Fahrbahnneigung verlassen wird.

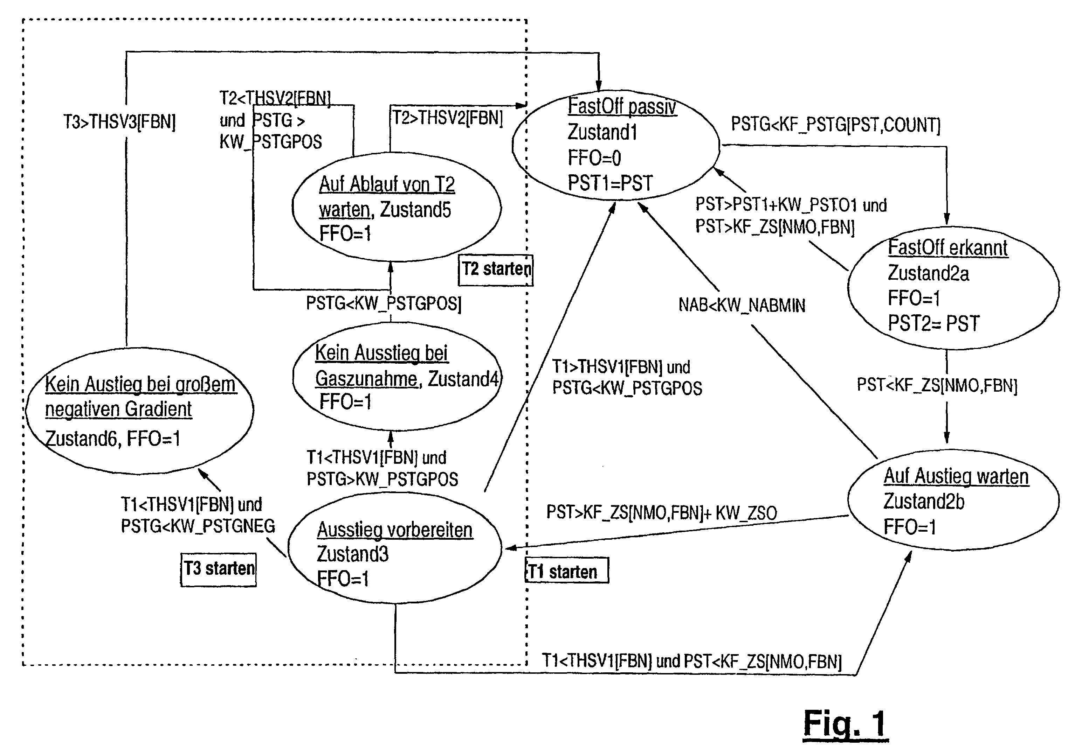

Bezug nehmend auf Fig. 1 ist schematisch ein Verfahren zur Steuerung eines Automatgetriebes eines Kraftfahrzeuges bei einer spontanen Gas-/ Pedalrücknahme, welche "FastOff" genannt wird, dargestellt, wobei das Automatgetriebe durch eine mit einem Fahrpedal beeinflußbare Brennkraftmaschine angetrieben wird und eine Elektronische Getriebesteuerung aufweist, in der ein Schaltkennfeld abgelegt ist.

Die Fig. 1 zeigt die Struktur des Verfahrens als Zustandsautomat, bei dem immer ein Zustand aktiv ist. Bei jedem Programmdurchlauf werden spezifische Bedingungen in dem jeweiligen Zustand überprüft. Trifft eine dieser Bedingungen zu, dann wird der aktuelle Zustand je nach Bedingung gewechselt. Trifft keine der Bedingungen zu, so wird der letzte Zustand erneut durchlaufen.

Zunächst wird für einen Zustand 1 definiert, daß keine spontane Gasrücknahme bzw. Pedalrücknahme vorliegt, weshalb der Zustand 1 als "FastOff passiv" bezeichnet ist. Von der Elektronischen Getriebesteuerung wird in diesem Zustand 1 erkannt, daß eine variable, den Zustand der spontanen Pedalrücknahme anzeigende Variable FFO (Flag FastOff) mit "0" besetzt ist und damit nicht erfüllt ist. Dem entsprechend wird von der Elektronischen Getriebesteuerung auch kein Befehl zur Hochschaltverhinderung ausgegeben.

Wenn in dem Zustand 1 "FFO=0" erkannt wird, wird ein aktueller Pedalstellungswert PST als Pedalstellungswert PST1 für den Zustand 1 abgespeichert. Der Pedalstellungswert PST wird dabei von der Elektronischen Getriebesteuerung aus einem ihr zugeführten Signal der Drosselklappenstellung, welche der Pedalstellung proportional ist, errechnet und dient als Ausgangswert zur Berechnung eines Pedalstellungsgradienten PSTG.

Des weiteren wird in dem Zustand 1 der nicht aktiven Hochschaltverhinderung abgefragt, ob der aktuelle Pedalstellungsgradient PSTG kleiner ist als eine in einem Kennfeld als Funktion des Pedalstellungswertes PST und eines Fahrertyp-Bewertungszählers COUNT abgelegte Pedalstellungsgradientenschwelle KF_PSTG[PST,COUNT].

Der Fahrertyp-Bewertungszählers COUNT ist dabei von herkömmlicher Art wie er z.B. in der "ATZ Automobiltechnische Zeitschrift" 94 (1992), Seite 428 ff, beschrieben ist.

Bei einem positiven Abfrageergebnis wird die Hochschaltverhinderung gestartet und in einen weiteren Zustand 2a gewechselt, der als Zustand "FastOff erkannt" definiert ist.

In diesem Zustand 2a wird von der Elektronischen Getriebesteuerung die Variablenbesetzung "FFO=1" erkannt und der aktuelle Pedalstellungswert PST2 abgespeichert.

Bei nun aktiver Hochschaltverhinderung wird in Zustand 2a geprüft, ob Zugbetrieb erkannt wird, indem der aktuelle Pedalstellungswert PST auf oder über einer von einer Motordrehzahl NMO und einem Fahrbahnneigungswert FBN abhängigen Zug-Schub-Kennlinie KF_ZS[NMO,FBN] liegt und ob der aktuelle Pedalstellungswert PST größer als der Pedalstellungswert PST1 bei Erkennen der spontanen Gas-/ Pedalrücknahme "FastOff" plus einem Offset-Wert KW_PSTO1 ist.

Wenn Zugbetrieb vorliegt und die Pedalstellung größer ist als im Ausgangszustand ist, dann wird der Zustand der Hochschaltverhinderung "FFO=1" verlassen und wieder in Zustand 1 mit deaktivierter Hochschaltverhinderung gewechselt.

Wenn hingegen der aktuelle Pedalstellungswert PST unter der von der Motordrehzahl NMO und dem Fahrbahnneigungswert FBN abhängigen Zug-Schub-Kennlinie KF_ZS[NMO,FBN] liegt, wird in einen Zustand 2b gewechselt, der als Zustand für "Auf Ausstieg warten" definiert ist, in dem ebenfalls die Hochschaltverhinderung "FFO=1" aktiv ist.

In diesem Zustand 2b wird festgestellt, ob eine minimale Fahrzeuggeschwindigkeit unterschritten wird, was gegeben ist, wenn eine Getriebeabtriebsdrehzahl NAB kleiner als eine vordefinierte minimale Getriebeabtriebsdrehzahl KW_NABMIN ist. Trifft dies zu, wird der Zustand der Hochschaltverhinderung verlassen und in den Zustand 1 mit deaktivierter Hochschaltverhinderung zurückgekehrt.

In dem Zustand 2b wird eine spontane Pedalrücknahme sicher festgestellt, da sowohl erkannt wurde, daß ein negativer Pedalstellungsgradient vorliegt als auch, daß in den Schubbetrieb geschaltet wurde.

Um zu prüfen, ob eines von mehreren, in Fig. 1 gestrichelt umrahmten Ausstiegskriterien aus dem Zustand der Hochschaltverhinderung gegeben ist, wird eine erste Zeit T1 gestartet und von dem Zustand 2b "Auf Ausstieg warten" in einen Zustand 3 gewechselt, der als Zustand für "Ausstieg vorbereiten" definiert ist, wenn der aktuelle Pedalstellungswert PST auf oder über der von der Motordrehzahl NMO und dem Fahrbahnneigungswert FBN abhängigen Zug-Schub-Kennlinie KE_ZS[NMO,FBN] plus einem Offset-Wert KW_ZSO, der eine applizierbare Variable darstellt, liegt.

Alternativ hierzu kann die Bedingung für einen Start der ersten Zeit T1 und für einen Wechsel von dem Zustand 2b "Auf Ausstieg warten" in den Zustand 3 "Ausstieg vorbereiten" auch derart festgelegt werden, daß der aktuelle Pedalstellungswert PST größer als der Pedalstellungswert PST2 zum Zeitpunkt der Erkennung der spontanen Gas-/ Pedalrücknahme "FastOff" plus einem applizierbaren Offset-Wert KW_PSTO2 sein muß.

Der ersten Zeit T1 ist ein erster begrenzter Zeitraum THSV1 zur Hochschaltverhinderung bzw. Hochschaltverzögerung zugeordnet, dessen Länge in Abhängigkeit von dem Fahrbahnneigungswert FBN, der in einem weiteren Modul der Elektronischen Getriebesteuerung ermittelt wird, festgelegt wird.

Wenn in dem Zustand 3 plötzlich wieder Schubbetrieb erkannt wird, d.h. daß der aktuelle Pedalstellungswert PST bei aktivierter Hochschaltverhinderung unter der von der Motordrehzahl NMO und dem Fahrbahnneigungswert FBN abhängigen Zug-Schub-Kennlinie KF_ZS[NMO,FBN] liegt, und der erste Zeitraum THSV1 noch nicht abgelaufen ist, wird von dem Zustand 3 "Ausstieg vorbereiten" in den Zustand 2b "Auf Ausstieg warten" zurückgekehrt.

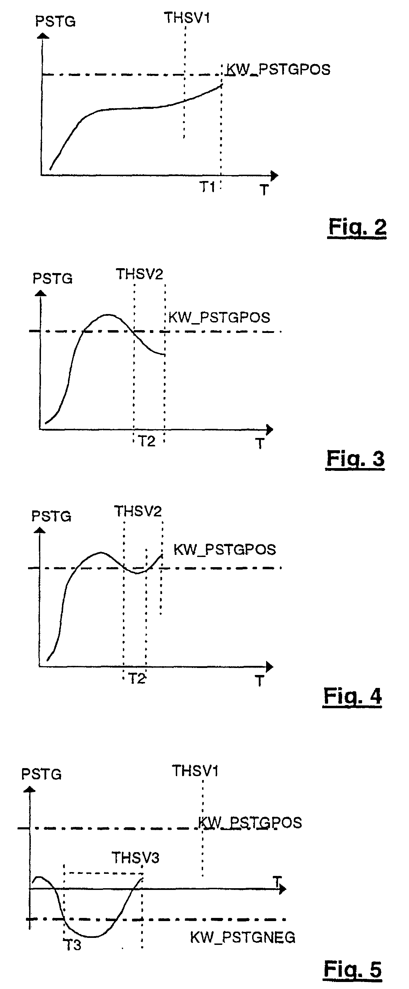

In Fig. 2 ist der Fall dargestellt, daß der erste Zeitraum THSV1 abgelaufen ist und der Pedalstellungsgradient PSTG in der ersten Zeit T1 unter einer positiven Pedalstellungsgradientenschwelle KW_PSTGPOS bleibt. Wenn dies in dem Zustand 3 "Ausstieg vorbereiten" festgestellt wird, dann wird in den Zustand 1 der deaktivierten Hochschaltverhinderung zurückgekehrt, wie es Fig. 1 zu entnehmen ist.

Wenn der Zeitraum THSV1 noch nicht verstrichen ist und der Pedalstellungsgradient PSTG eine positive Pedalstellungsgradientenschwelle überschreitet, dann wird von dem Zustand 3 "Ausstieg vorbereiten" in einen weiteren Zustand 4, genannt "Kein Ausstieg bei Gaszunahme", gewechselt.

In Fig. 3 und Fig. 4 ist der Fall dargestellt, daß der Pedalstellungsgradient PSTG wieder unter eine positive Pedalstellungsgradientenschwelle KW_PSTGPOS sinkt. Wenn dies in dem Zustand 4 festgestellt wird, dann wird eine zweite Verzögerungszeit T2 mit einem ihr zugeordneten begrenzten und wiederum nach dem Fahrbahnneigungswert FBN bemessenen Zeitraum THSV2[FBN] gestartet und in einen Zustand 5, welcher in Fig. 1 mit "Auf Ablauf von T2 warten" bezeichnet ist, gewechselt.

Wenn in dem Zustand 5 erkannt wird, daß der zweite Zeitraum THSV2 verstrichen ist, wie es in Fig. 3 gezeigt ist, dann wird in den Zustand 1 gewechselt, d.h. die Hochschaltverhinderung wird deaktiviert.

Falls der zweite Zeitraum THSV2 jedoch noch nicht abgelaufen ist und der Pedalstellungsgradient PSTG die positive Pedalstellungsgradientenschwelle wieder überschreitet, wie es in Fig. 4 ersichtlich ist, dann wird der Zustand 5 wiederholt und die zweite Zeit T2 erneut gestartet.

Betrachtet man nochmals Zustand 3, nämlich "Ausstieg vorbereiten", so ist in Fig. 1 und insbesondere in Fig. 5 zu sehen, daß eine dritte Verzögerungszeit T3 gestartet wird, der ein begrenzter und wiederum von dem Fahrbahnneigungswert FBN abhängiger Zeitraum THSV3 zugeordnet ist, wenn der erste Zeitraum THSV1 noch nicht verstrichen ist und der Pedalstellungsgradient PSTG eine negative Pedalstellungsgradientenschwelle KW_PSTGNEG unterschreitet. In diesem Fall wird von dem Zustand 3 in einen weiteren Zustand 6, in Fig. 1 bezeichnet als "Kein Ausstieg bei großem negativen Gradient", gewechselt. Der Zustand der Hochschaltverhinderung wird hier verlassen, sobald der dritte Zeitraum THSV3 abgelaufen ist.

Als Alternative zum Start der dritten Zeit T3 kann in einer anderen Ausführung auch vorgesehen sein, daß die erste Zeit T1 erneut gestartet wird, wenn eine negative Pedalstellungsgradientenschwelle KW_PSTGNEG unterschritten wird bevor der erste Zeitraum THSV1 verstrichen ist.

Die positive und die negative Pedalstellungsgradientenschwelle KW_PSTGPOS, KW_PSTGNEG sind dabei jeweils in Abhängigkeit von der Pedalstellung PST und dem Fahrertyp-Bewertungszähler COUNT festgelegt.

In sämtlichen beschriebenen Zuständen mit einer Hochschaltverhinderung wird diese nach den angeführten Bedingungen selbstverständlich nur dann ausgeführt, wenn eine maximale Motorbegrenzungsdrehzahl NMO_MAX nicht überschritten wird.

### Bezeichnungen

- COUNT: Fahrertyp-Bewertungszähler
- FastOff: spontane Gas-/ Pedalrücknahme
- FBN: Fahrbahnneigungswert, Beschleunigungspotential
- FFO: Flag für Hochschaltverhinderung
- KF_PSTG: Pedalstellungsgradientenschwelle, f(PST, COUNT)
- KF_ZS: Zug-Schub-Kennlinie, f(NMO, FBN)
- KW_NABMIN: Minimale Abtriebsdrehzahl in FastOff
- KW_PSTGNEG: negative Pedalstellungsgradientenschwelle
- KW_PSTGPOS: positive Pedalstellungsgradientenschwelle
- KW_PSTO1: Offset-Wert, um sicher Zugbetrieb zu erkennen
- KW_PSTO2: Offset-Wert, um Zunahme des Pedalstellungswertes auszuschließen
- KW_ZSO: Drosselklappenoffset zum Ausstieg aus FastOff
- NAB: Getriebeabtriebsdrehzahl
- NAB_MIN: minimale Getriebeabtriebsdrehzahl
- NMO: Motordrehzahl
- PST: Pedalstellung
- PST1: Pedalstellungswert, Drosselklappenwert bei Erkennen von FastOff
- PST2: Pedalstellungswert, Drosselklappenwert
- PSTG: Pedalstellungsgradient
- T1: erste Zeit für Ausstiegsbedingungen
- T2: zweite Zeit für Ausstiegsbedingungen
- T3: dritte Zeit für Ausstiegsbedingungen
- THSV_1: erste Verzögerungszeit für Ausstieg, f(FBN)
- THSV_2: zweite Verzögerungszeit für Ausstieg, f(FBN)
- THSV_3: dritte Verzögerungszeit für Ausstieg, f(FBN)

## Patentansprüche

1. Verfahren zur Steuerung eines Automatgetriebes eines Kraftfahrzeuges bei einer spontanen Gas-/ Pedalrücknahme (FastOff), wobei
- das Automatgetriebe durch eine mit einem Fahrpedal beeinflußbare Brennkraftmaschine angetrieben wird und ein einer Pedalstellung proportionales Signal einer Elektronischen Getriebesteuerung zugeführt wird, in der ein Schaltkennfeld abgelegt ist; **dadurch gekennzeichnet, daß**:
- die spontanen Gas-/ Pedalrücknahme (FastOff) erkannt wird und eine Hochschaltverhinderung aktiviert wird, wenn ein Pedalstellungsgradient (PSTG) kleiner ist als eine in einem Kennfeld als Funktion eines Pedalstellungswertes (PST) und eines Fahrertyp-Bewertungszählers (COUNT) abgelegte Pedalstellungsgradientenschwelle (KF_PSTG);
- der Zustand der Hochschaltverhinderung (FFO=1) aktiv ist bis
a) ein Zugbetrieb erkannt wird, wenn der aktuelle Pedalstellungswert (PST) eine Zug-Schub-Kennlinie (KF_ZS), welche in einem Kennfeld als Funktion eines einer Motordrehzahl (NMO) äquivalenten Wertes und eines einem Fahrbahnneigungswert äquivalenten Beschleunigungspotentialwertes (FBN) abgelegt ist, überschreitet; und/oder
b) eine Zeit (T1, T2) nach einem definierten Zeitraum (THSV1, THSV2) abgelaufen ist, wobei der Zustand der Hochschaltverhinderung (FFO=1) nach einem ersten Zeitraum (THVS1) verlassen wird, wenn der Pedalstellungsgradient (PSTG) in der ersten Zeit (T1) unter einer positiven Pedalstellungsgradientenschwelle (KW_PSTGPOS) bleibt, und eine zweite Zeit (T2) gestartet wird, wenn die positive Pedalstellungsgradientenschwelle (KW_PSTGPOS) überschritten und wieder unterschritten wird, wobei der Zustand der Hochschaltverhinderung (FFO=1) nach Ablauf des zweiten Zeitraumes (THSV2) verlassen wird, wenn die positive Pedalstellungsgradientenschwelle (KW_PSTGPOS) in dem zweiten Zeitraum (THSV2) nicht erneut überschritten wird.

2. Verfahren nach Anspruch 1, **dadurch gekennzeichnet, daß** der Zustand der Hochschaltverhinderung (FFO=1) verlassen wird, wenn der aktuelle Pedalstellungswert (PST) größer als der Pedalstellungswert (PST1) bei Erkennen der spontanen Gas-/ Pedalrücknahme (FastOff) plus einem Offset-Wert (KW_PSTO1) ist und Zugbetrieb erkannt wird, indem der aktuelle Pedalstellungswert (PST) auf oder über der von der Motordrehzahl (NMO) und dem Fahrbahnneigungswert (FBN) abhängigen Zug-Schub-Kennlinie (KF_ZS) liegt.

3. Verfahren nach Anspruch 1 oder 2, **dadurch gekennzeichnet, daß** der Zustand der Hochschaltverhinderung (FFO=1) verlassen wird, wenn eine Getriebeabtriebsdrehzahl (NAB) kleiner als eine vordefinierte minimale Getriebeabtriebsdrehzahl (KW_NABMIN) ist.

4. Verfahren nach einem der Ansprüche 1 bis 3, **dadurch gekennzeichnet, daß** die erste Zeit (T1) in einem Zustand "Auf Ausstieg warten" gestartet wird, wenn ein Schubbetrieb erkannt wird.

5. Verfahren nach einem der Ansprüche 1 bis 4, **dadurch gekennzeichnet, daß** in dem ersten Zeitraum (THSV1) von dem Zustand "Auf Ausstieg warten" in einen Zustand "Ausstieg vorbereiten" gewechselt wird, wenn der aktuelle Pedalstellungswert (PST) auf oder über der von der Motordrehzahl (NMO) und dem Fahrbahnneigungswert (FBN) abhängigen Zug-Schub-Kennlinie (KF_ZS) plus einem Offset-Wert (KW_ZSO) liegt oder wenn der aktuelle Pedalstellungswert (PST) größer ist als der Pedalstellungswert (PST2) zum Zeitpunkt der Erkennung der spontanen Gas-/ Pedalrücknahme (FastOff) plus einem Offset-Wert (KW_PSTO2).

6. Verfahren nach Anspruch 5, **dadurch gekennzeichnet, daß** von dem Zustand "Ausstieg vorbereiten" in den Zustand "Auf Ausstieg warten" zurückgekehrt wird, wenn Schubbetrieb erkannt wird bevor der erste Zeitraum (THSV1) abgelaufen ist.

7. Verfahren nach einem der Ansprüche 4 bis 6, **dadurch gekennzeichnet, daß** der Schubbetrieb erkannt wird, wenn der aktuelle Pedalstellungswert (PST) bei aktivierter Hochschaltverhinderung unter der von der Motordrehzahl (NMO) und dem Fahrbahnneigungswert (FBN) abhängigen Zug-Schub-Kennlinie (KF_ZS) liegt.

8. Verfahren nach einem der Ansprüche 1 bis 7, **dadurch gekennzeichnet, daß** die zweite Zeit (T2) erneut gestartet wird, wenn die positive Pedalstellungsgradientenschwelle (KW_PSTGPOS) in dem zweiten Zeitraum (THSV2) überschritten wird.

9. Verfahren nach einem der Ansprüche 1 bis 8, **dadurch gekennzeichnet, daß** eine dritte Zeit (T3) gestartet wird, wenn eine negative Pedalstellungsgradientenschwelle (KW_PSTGNEG) unterschritten wird bevor der erste Zeitraum (THSV1) verstrichen ist, wobei der Zustand der Hochschaltverhinderung (FFO=1) verlassen wird, wenn ein dritter Zeitraum (THSV3) abgelaufen ist.

10. Verfahren nach einem der Ansprüche 1 bis 8, **dadurch gekennzeichnet, daß** die erste Zeit (T1) erneut gestartet wird, wenn eine negative Pedalstellungsgradientenschwelle (KW_PSTGNEG) unterschritten wird bevor der erste Zeitraum (THSV1) verstrichen ist.

11. Verfahren nach einem der Ansprüche 1 bis 10, **dadurch gekennzeichnet, daß** die positive und/oder die negative Pedalstellungsgradientenschwelle (KW_PSTGPOS, KW_PSTGNEG) abhängig von der Pedalstellung (PST) und dem Fahrertyp-Bewertungszähler (COUNT) festgelegt wird.

12. Verfahren nach einem der Ansprüche 1 bis 11, **dadurch gekennzeichnet, daß** der erste und/oder zweite und/oder dritte Zeitraum der Hochschaltverzögerung (THSV1, THSV2, THSV3) in Abhängigkeit von dem Fahrbahnneigungswert (FBN) bestimmt wird.

13. Verfahren nach einem der Ansprüche 1 bis 12, **dadurch gekennzeichnet, daß** die Größen des Fahrertyp-Bewertungszähler (COUNT) in einem Programmodul der Elektronischen Getriebesteuerung zur Auswertung des Fahrverhaltens ermittelt werden.

14. Verfahren nach einem der Ansprüche 1 bis 13, **dadurch gekennzeichnet, daß** der Zustand der Hochschaltverhinderung deaktiviert wird, wenn eine maximale Motordrehzahl (NMO_MAX) überschritten wird.

## Claims

1. Procedure for controlling an automatic transmission of a vehicle with spontaneous throttle / pedal release (FastOff), whereby
- the automatic transmission is driven by an internal combustion engine operated in response to an accelerator pedal and a signal proportional to a pedal position is transmitted to an electronic transmission control unit in which shift characteristics are saved; **characterized in that**
- the spontaneous throttle / pedal reduction (FastOff) is detected and an upshift inhibit is activated if a pedal position gradient (PSTG) is less than a pedal position gradient threshold (KF_PSTG) saved in characteristics as a function of a pedal position value (PST) and a driver type evaluation counter (COUNT);
- the status of the upshift inhibit (FFO=1) is active until
a) traction mode is detected if the present pedal position value (PST) exceeds a coasting-traction characteristics curve (KF_ZS) which is saved in characteristics as a function of a value equivalent to an engine speed (NMO) and a value equivalent to a road surface inclination value (FBN); and/or
b) a time (T1, T2) following a defined time period (THSV1, THSV2) expires, whereby the status of the upshift inhibit (FFO=1) is exited after an initial time period (THVS1), if the pedal position gradient (PSTG) in the first time (T1) remains below a positive pedal position gradient threshold (KW_PSTGPOS), and a second time (T2) is started if the positive pedal
position gradient threshold (KW_PSTGPOS) is exceeded and then fallen below again, whereby the status of the upshift inhibit (FFO=1) is exited once the second time period (THSV2) has expired, if the positive pedal position gradient threshold (KW_PSTGPOS) is not again exceeded in the second time period (THSV2).

2. Regarding procedure in accordance with claim 1, **characterized in that** the status of the upshift inhibit (FFO=1) is exited if the present pedal position value (PST) is greater than the pedal position value (PST1) when detecting the spontaneous throttle / pedal reduction (FastOff) plus an offset value (KW_PSTO1) and traction mode is detected since the present pedal position value (PST) is on or above the traction-coasting characteristics curve (KF_ZS) which is dependent on the engine speed (NMO) and the road surface inclination value (FBN).

3. Procedure in accordance with claim 1 or 2, **characterized in that** the status of the upshift inhibit (FFO=1) is exited if the transmission output speed (NAB) is less than a predefined minimum transmission output speed (KW_NABMIN).

4. Procedure in accordance with one of claims 1 to 3, **characterized in that** the first time (T1) is started in a "Wait for exit" status, if coasting mode is detected.

5. Procedure in accordance with one of claims 1 to 4, **characterized in that** in the first time period (THSV1) a switch is made from the "Wait for exit" status to a "Prepare exit" status, if the present pedal position value (PST) is on or above the traction-coasting characteristics curve (KF_ZS) which is dependent on the engine speed (NMO) and the road surface inclination value (FBN) plus an offset value (KW_ZSO) or if the present pedal position value (PST) is greater than the pedal position value (PST2) at the time when spontaneous speed / pedal reduction (FastOff) is detected plus an offset value (KW_PST02).

6. Procedure in accordance with claim 5, **characterized in that** a change is made back from the "Prepare exit" status to a "Wait for exit" status, if coasting mode is detected before the first time period (THSV1) has expired.

7. Procedure in accordance with one of claims 4 to 6, **characterized in that** coasting mode is detected if the present pedal position value (PST) is below the traction-coasting characteristics curve (KF_ZS) which depends on engine speed (NMO) and the road surface inclination value (FBN) when the upshift inhibited is activated.

8. Procedure in accordance with one of claims 1 to 7, **characterized in that** the second time (T2) is again started if the positive pedal position gradient threshold (KW_PSTGPOS) is exceeded in the second time period (THSV2).

9. Procedure in accordance with one of claims 1 to 8, **characterized in that** a third time (T3) is started if the value falls below a negative pedal position gradient threshold (KW_PSTGNEG) before the first time period (THSV1) expires, whereby the status of the upshift inhibit (FFO=1) is exited if a third time period (THSV3) expires.

10. Procedure in accordance with one of claims 1 to 8, **characterized in that** the first time (T1) is again started, if the value falls below a negative pedal position gradient threshold (KW_PSTGNEG) before the first time period (THSV1) expires.

11. Procedure in accordance with one of claims 1 to 10, **characterized in that** the positive and/or negative pedal position gradient threshold (KW_PSTGPOS, KW_PSTGNEG) is defined depending on the pedal position (PST) and the driver type evaluation counter (COUNT).

12. Procedure in accordance with one of claims 1 to 11, **characterized in that** the first and/or second and/or third time period of the upshift delay (THSV1, THSV2, THSV3) is determined depending on the road surface inclination value (FBN).

13. Procedure in accordance with one of claims 1 to 12, **characterized in that** the parameters of the driver type evaluation counter (COUNT) are determined in a program module of the electronic transmission control unit to evaluation the driver characteristics.

14. Procedure in accordance with one of claims 1 to 13, **characterized in that** the status of the upshift inhibit is deactivated if a maximum engine speed (NMO_MAX) is exceeded.

## Revendications

1. Procédé pour la commande d'une boîte de vitesses automatique d'un véhicule automobile dans le cas d'un retour spontané de la pédale ou des gaz (FastOff), dans lequel
- la boîte de vitesses automatique est entraînée par un moteur à combustion interne sur lequel on peut agir au moyen d'une pédale d'accélérateur, et un signal proportionnel à la position de la pédale est envoyé à une commande électronique de la boîte de vitesses dans laquelle un diagramme de changement de rapport est enregistré, **caractérisé en ce que**
- le retour spontané de la pédale/des gaz (FastOff) est détecté et une inhibition de montée de rapport est activée lorsqu'un gradient de la position de la pédale (PSTG) est inférieur à un seuil de gradient de la position de la pédale (KF_PSTG) qui est enregistré dans un diagramme caractéristique en fonction d'une valeur de position de la pédale (PST) et d'un compteur d'évaluation du type de conducteur (COUNT) ;
- l'état de l'inhibition de montée de rapport (FFO=1) est actif jusqu'au moment où
a) un fonctionnement en traction est détecté lorsque la valeur actuelle de la position de la pédale (PST) franchit dans le sens ascendant une caractéristique de traction-poussée (KF_ZS) qui est enregistrée dans un diagramme caractéristique en fonction d'une valeur équivalente à une vitesse de rotation du moteur (NMO) et d'une valeur de potentiel d'accélération (FBN) qui est équivalente à une valeur de pente descendante de la chaussée ; et/ou
b) un temps (T1, T2) qui fait suite à un laps de temps défini (THSV1, THSV2), s'est écoulé, l'état de l'inhibition de montée de rapport (FFO=1) étant abandonné après un premier laps de temps (THVS1) lorsque, dans le premier temps (T1), le gradient de la position de la pédale (PSTG) reste au-dessous d'un seuil positif du gradient de position de la pédale (KW_PSTGPOS) et un deuxième temps (T2) est démarré lorsque le seuil positif du gradient de la position de la pédale (KW_PSTGPOS) est franchi dans le sens ascendant et de nouveau franchi dans le sens descendant, l'état de l'inhibition de montée de rapport (FFO=1) étant abandonné après l'écoulement du deuxième laps de temps (THSV2) lorsque le seuil positif du gradient de la position de la pédale (KW_PSTGPOS) n'est pas de nouveau franchi dans le sens ascendant dans le deuxième laps de temps (THSV2).

2. Procédé selon la revendication 1, **caractérisé en ce que** l'état de l'inhibition de montée de rapport (FFO=1) est abandonné lorsque la valeur actuelle de la position de la pédale (PST) est supérieure à la valeur de la position de la pédale (PST1) existant au moment de la détection du retour spontané des gaz/de la pédale (FastOff), plus une valeur de décalage (KW_PSTO1) et un fonctionnement en traction est détecté, par le fait que la valeur actuelle de la position de la pédale (PST) se trouve sur ou au-dessus de la caractéristique de traction-poussée (KF_ZS) qui dépend de la vitesse de rotation du moteur (NMO) et de la valeur de la pente descendante de la chaussée (FBN).

3. Procédé selon la revendication 1 ou 2, **caractérisé en ce que** l'état de l'inhibition de montée de rapport (FFO=1) est abandonné lorsqu'une vitesse de rotation de sortie de la boîte de vitesses (NAB) est inférieure à une vitesse de rotation minimale prédéfinie de sortie de la boîte de vitesses (KW_NABMIN).

4. Procédé selon l'une des revendications 1 à 3, **caractérisé en ce que** le premier temps (T1) est démarré dans un état «attendre la sortie» lorsqu'un fonctionnement en poussée est détecté.

5. Procédé selon l'une des revendications 1 à 4, **caractérisé en ce que**, dans le premier laps de temps (THSV1), on passe de l'état «attendre la sortie» à un état «préparer la sortie» lorsque la valeur actuelle de la position de la pédale (PST) se trouve sur ou au-dessus de la caractéristique de traction-poussée (KF_ZS) qui dépend de la vitesse de rotation du moteur (NMO) et de la valeur de la pente descendante de la chaussée (FBN) plus une valeur de décalage (KW_ZSO), ou lorsque la valeur actuelle de la position de la pédale (PST) est supérieure à la valeur de position de la pédale (PST2) existant à l'instant de la détection du retour spontané des gaz/de la pédale (FastOff) plus une valeur de décalage (KW_PSTO2).

6. Procédé selon la revendication 5, **caractérisé en ce qu'**on revient de l'état «préparer la sortie» à l'état «attendre la sortie» lorsque le fonctionnement en poussée est détecté avant que le premier laps de temps (THSV1) se soit écoulé.

7. Procédé selon l'une des revendications 4 à 6, **caractérisé en ce que** le fonctionnement en poussée est détecté lorsque, alors que l'inhibition de montée de rapport est activée, la valeur actuelle de la position de la pédale (PST) se trouve au-dessous de la caractéristique de traction-poussée (KF_ZS) qui dépend de la vitesse de rotation du moteur (NMO) et de la valeur de la pente descendante de la chaussée (FBN).

8. Procédé selon l'une des revendications 1 à 7, **caractérisé en ce que** le deuxième temps (T2) est de nouveau démarré lorsque le seuil positif du gradient de la position de la pédale (KW_PSTGPOS) est franchi dans le sens ascendant dans le deuxième laps de temps (THSV2).

9. Procédé selon l'une des revendications 1 à 8, **caractérisé en ce qu'**un troisième temps (T3) est démarré lorsqu'un seuil négatif du gradient de la position de la pédale (KW_PSTGNEG) est franchi dans le sens descendant avant que le premier laps de temps (THSV1) ne se soit écoulé, l'état de l'inhibition de montée de rapport (FFO=1) étant abandonné lorsqu'un troisième laps de temps (THSV3) s'est écoulé.

10. Procédé selon l'une des revendications 1 à 8, **caractérisé en ce que** le premier temps (T1) est de nouveau démarré lorsqu'un seuil négatif de gradient de la position de la pédale (KW_PSTGNEG) est franchi dans le sens descendant avant que le premier laps de temps (THSV1) ne se soit écoulé.

11. Procédé selon l'une des revendications 1 à 10, **caractérisé en ce que** le seuil positif et/ou le seuil négatif du gradient de la position de la pédale (KW_PSTGPOS, KW_PSTGNEG) sont fixés en fonction de la position de la pédale (PST) et en fonction du compteur d'évaluation du type de conducteur (COUNT).

12. Procédé selon l'une des revendications 1 à 11, **caractérisé en ce que** le premier et/ou deuxième et/ou troisième laps de temps de la temporisation de la montée de rapport (THSV1, THSV2, THSV3) est ou sont déterminés en fonction de la valeur de la pente descendante de la chaussée (FBN).

13. Procédé selon l'une des revendications 1 à 12, **caractérisé en ce que** les grandeurs du compteur d'évaluation du type de conducteur (COUNT) sont obtenues dans un module de programme de la commande électronique de la boîte de vitesses pour l'évaluation du comportement du conducteur.

14. Procédé selon l'une des revendications 1 à 13, **caractérisé en ce que** l'état de l'inhibition de montée de rapport est désactivé lorsqu'une vitesse de rotation maximale du moteur (NMO_MAX) est franchie dans le sens ascendant.
